# EUROPÄISCHE PATENTANMELDUNG

(11) **EP 0 868 066 A2**
(43) Veröffentlichungstag der Anmeldung: **30.09.1998**
(21) Anmeldenummer: 97121884.7
(22) Anmeldetag: 12.12.1997
(51) Int. Cl.: H04N 1/00

(54) **Vorrichtung zum Empfangen und Senden von Telefaxnachrichten**

(30) Priorität: 25.03.1997 DE 19712423
(71) Anmelder: Deutsche Telekom AG, 53113 Bonn (DE)
(72) Erfinder: Seidel, Hans-Joachim, Dipl.-Ing., D-64331 Weiterstadt (DE)

(57) **Zusammenfassung**

Die Erfindung beschreibt eineVorrichtung zum Empfangen und Versenden von Telefaxnachrichten, insbesondere zur Nutzung durch Sehbehinderte.

Ein Telefaxgerät ist über eine parallele oder serielle Schnittstelle mit einem Personalcomputer verbunden. Im Personalcomputer ist entsprechende Software vorhanden wie ein Texterkennungsprogramm, ein Rechtschreibkorrekturprogramm, ein Programm zur Sprachausgabe und ein Programm zur Spracherkennung. Weiterhin ist der Personalcomputer mit verschiedenen Zusatzeinrichtungen verbunden. Dies sind beispielsweise eine Brailleschriftlesezeile welche auch in der Tastatur integriert sein kann, ein Lautsprecher zur Sprachausgabe und ein Mikrophon zur Spracheingabe.

Eine ankommende Faxnachricht wird im Personalcomputer so aufbereitet, daß sie über die Brailleschriftlesezeile oder einen Brailleschriftdrucker, in vergrößerter Form auf einem Monitor oder als Sprache ausgegeben werden kann.

Eine zweite Ausführungsform der erfindungsgemäßen Vorrichtung benutzt anstelle des Telefaxgerätes eine Faxkarte, wobei ein Scanner das Einlesen der Schriftstücke ermöglicht.

## Beschreibung

Die Erfindung bezieht sich auf eine Vorrichtung zum Empfangen und Senden von Telefaxnachrichten, die besonders für Sehbehinderte geeignet ist.

Die Telefaxübertragung hat in den letzten Jahren einen nicht vorauszusehenden Aufschwung erlebt und ist aus dem Geschäftsverkehr nicht mehr wegzudenken. Zusätzlich dringt sie verstärkt in den privaten Bereich ein. Dies hat dazu geführt, daß es für jede Anwendung und jede Benutzergruppe eine Vielzahl von Telefaxgeräten auf dem Markt gibt. Damit die unterschiedlichen Telefaxgeräte ohne Schwierigkeiten untereinander kommunizieren können, ist gleichzeitig das Übertragungsverfahren für Telefaxnachrichten vereinheitlicht und in Richtlinien wie z. B. im VDMA Einheitsblatt 24985-1/2 DTS (Der Telefax Standard) niedergelegt worden. Nachfolgend wird das standardisierte Übertragungsverfahren für Telefaxnachrichten kurz beschrieben:

Nachdem die Verbindung zwischen den sendenden und empfangenden Telefaxgeräten hergestellt ist, tauschen diese beiden Telefaxgeräte zuerst Kennungs- und Steuersignale aus. Hierzu gehören z.B. die Art des Telefaxgerätes (z.B. Faxgerät der Gruppe 2 oder 3), ASCII-File- oder Pixelübertragung. Erst wenn dies zwischen den Telefaxgeräten abgeklärt ist, beginnt die eigentliche Nachrichtenübertragung. Wenn die Nachrichtenübertragung abgeschlossen ist, wird heute in der Regel ein Sendeprotokoll erstellt und die Verbindung zwischen den Telefaxgeräten ausgelöst.

Durch die verstärkte Benutzung im privaten Bereich hat sich aber gezeigt, daß eine bestimmte Personengruppe, die sehbehinderten Menschen, außen vorbleibt.

Der Erfindung liegt nun die Aufgabe zugrunde, ausgehend von einer Telefaxvorrichtung wie sie z.B. im VDMA Einheitsblatt 24985-1/2 DTS (Der Telefax Standard) ebenfalls beschrieben ist, eine Vorrichtung zum Empfangen und Senden von Telefaxnachrichten zu entwickeln, die es auch Sehbehinderten gestattet, an diesem Dienst ohne Einschränkungen teilzunehmen. Diese Aufgabe wird durch die kennzeichnenden Merkmale des Anspruchs 1 gelöst.

Vorteilhaft ist hierbei insbesondere, daß keine oder nur begrenzte manuelle Eingriffe notwendig sind und alles vollautomatisch abläuft.

In den abhängigen Ansprüchen sollen bevorzugte Weiterbildungen geschützt werden.

Die Erfindung wird nachfolgend anhand von Ausführungsbeispielen erläutert. Hierbei zeigen:
- Figur 1:: vereinfachte Darstellung eines Telekommunikationsnetzes mit zwei angeschlossenen Telefaxgeräten,
- Figur 2:: ein erstes Ausführungsbeispiel einer Vorrichtung nach der Erfindung,

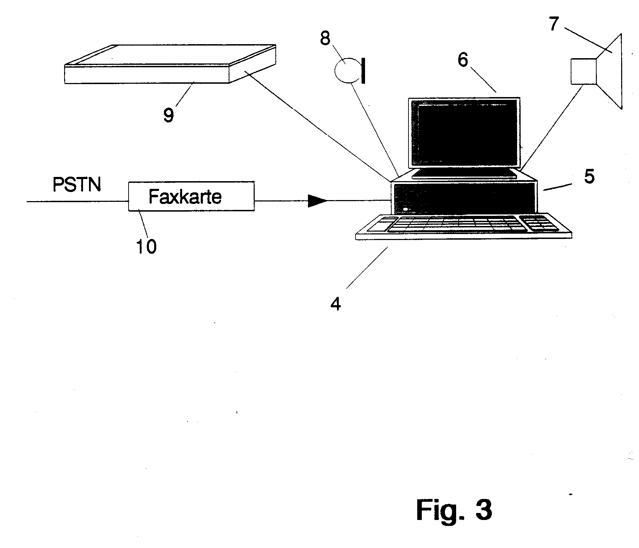

- Figur 3:: ein zweites Ausführungsbeispiel einer Vorrichtung nach der Erfindung,
- Figur 4:: Verfahrensablauf in einem Telefaxgerät abhängig von der Art der übertragenden Telefaxnachricht,
- Figur 5:: Verfahrensablauf innerhalb eines Telefaxgerätes beim Empfang einer Telefaxnachricht in Form eines ASCII-Files und
- Figur 6:: Verfahrensablauf bei der Umwandlung einer Telefaxnachricht, die als Pixelgrafik vorliegt, in ein ASCII-File.

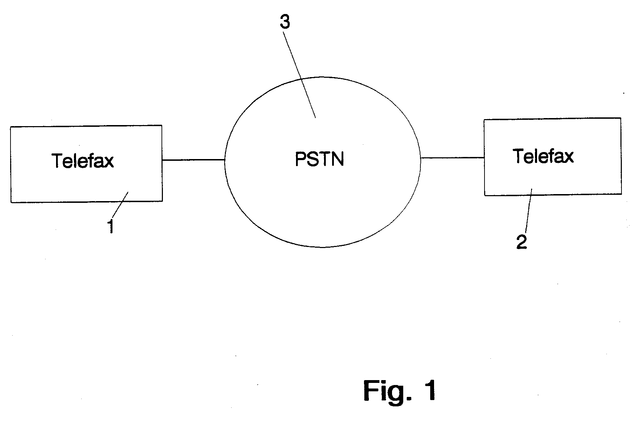

Die Figur 1 zeigt vereinfacht die typische Verbindung zwischen zwei Telefaxgeräten 1, 2 über ein Telekommunikationsnetz 3. Hierbei soll 1 ein normales Telefaxgerät und 2 eine erfindungsgemäße Vorrichtung zum Empfangen und Senden von Telefaxnachrichten sein.

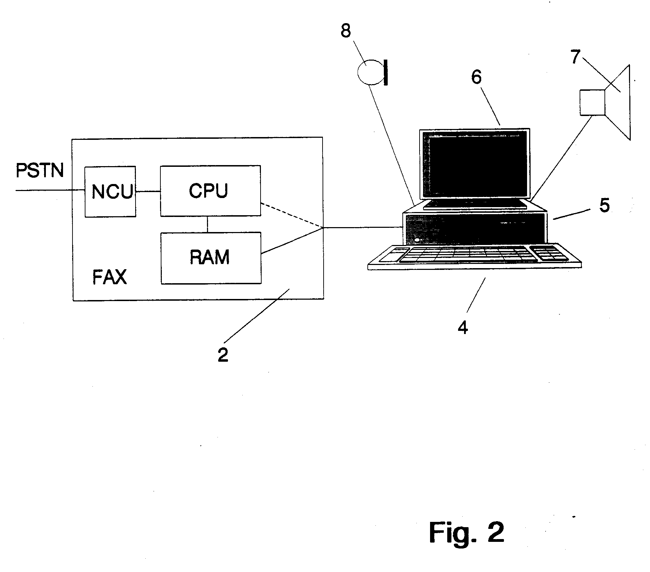

In Figur 2 ist eine erste Ausführungsform der erfindungsgemäßen Vorrichtung dargestellt. Diese setzt sich aus dem Telefaxgerät 2 mit einer parallelen oder seriellen Schnittstelle und einem Ein-/Ausgabemodul, das die Telefaxnachricht in eine für Sehbehinderte verwertbaren Form umwandelt, zusammen. Das Ein- und Ausgabemodul besteht in seiner Grundausstattung aus einem Personalcomputer 5 mit Monitor 6 und Tastatur 4. Der Monitor 6 dient dazu, die Telefaxnachricht vergrößert wiederzugeben. Die Tastatur 4 ist mit einer Brailleschriftlesezeile kombiniert, welche die Bedienung des Personalcomputers 5 und die Eingabe von Text erleichtert. Zusätzlich können ein Lautsprecher 7 und ein Mikrofon 8 angeschlossen sein, die zur Sprachein- und -ausgabe dienen. Für die Brailleschriftausgabe hat sich noch eine weitere Ausgabevorrichtung durchgesetzt, nämlich speziell für Brailleschrift entwickelte Drucker. Ferner kann auch eine Brailleschrifttastatur vorhanden sein. Alle diese Zusatzeinrichtungen im Ein-/Ausgabemodul wie Sprachein- und -ausgabe usw. können aus Kostengründen auch nur einzeln vorhanden sein.

Das Telefaxgerät 2 ist mit dem Telekommunikationsnetz (PSTN) über eine Netzwerkkarte (NCU= Network-Central-Unit), die der Anpassung an das Telekommunikationsnetz dient, und mit dem Personalcomputer 5 über die parallele oder serielle Schnittstelle verbunden. Es weist die bei Telefaxgeräten üblichen Einrichtungen wie Druckeinheit, Scanner usw. auf. In der Zeichnung sind aber aus Gründen der Übersichtlichkeit nur die für das Verständnis der Funktionsweise der Erfindung notwendigen Funktionsteile wie CPU = Central-Processor-Unit, der zur Steuerung des Telefaxgerätes 2 dient, und RAM = Speicher dargestellt.

Nachfolgend wird die Arbeitsweise der erfindungsgemäßen Vorrichtung erläutert. Wird das Telefaxgerät 2 angewählt, so erfolgt nach dem Verbindungsaufbau zuerst in bekannter Weise der Austausch von Kennungs- und Steuersignalen. Danach wird die Telefaxnachricht übertragen und nach erfolgreicher Übertragung das Sendeprotokolls abgeschickt und die Verbindung aufgelöst.

Innerhalb der erfindungsgemäßen Vorrichtung sind zwei grundsätzliche Verfahren der Weitergabe der Telefaxnachricht möglich. Das erste besteht darin, daß die Telefaxnachricht zuerst in den Speicher (RAM) des Telefaxgerätes 2 zwischengespeichert wird. Nach Auflösung der Verbindung zum Telekommunikationsnetz (PSTN) wird der Inhalt des Speichers (RAM) ausgelesen und an den Personalcomputer 5 in der Regel in telefaxcodiertem Format übertragen. Eine Konvertierung wird erst im Personalcomputer 5 vorgenommen. Das Absenden einer Telefaxnachricht erfolgt in umgekehrter Reihenfolge. Vorteilhaft bei diesem Verfahren ist, daß der Personalcomputer 5 erst nach Verbindungsaufbau oder sogar erst nach Verbindungsabbau hochgefahren werden muß; somit sind Stromkosten einzusparen. Bei dem zweiten Verfahren wird die Telefaxnachricht direkt ohne Benutzung des Speichers (RAM) an den Personalcomputer 5 übertragen, deshalb muß die Zentraleinheit (CPU) des Telefaxgerätes 2 leistungsfähiger ausgelegt sein. Vorteilhaft ist hier, daß der Speicher (RAM) im Telefaxgerät 2 kleiner sein kann, nachteilig ist aber, daß der Personalcomputer 5 sofort anlaufen muß. Gemeinsam ist beiden Verfahren, daß handelsübliche Telefaxgeräte eingesetzt werden können, die auch eine Telefaxausgabe in Papierform ermöglichen und als Drucker einsetzbar sind.

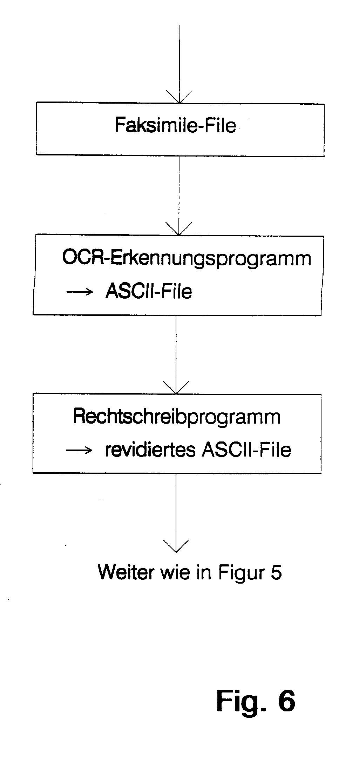

Figur 6 zeigt eine zweite Ausführungsform der erfindungsgemäßen Vorrichtung. Sie besteht ebenfalls aus einem Personalcomputer 5 an dem ein Monitor 6 und eine Tastatur 4 angeschlossen ist. Die Verbindung zum Telekommunikationsnetz (PSTN) erfolgt hier aber über eine Faxkarte 10. Neben den auch in der ersten Ausführungsform speziell für Sehbehinderte vorgesehenen Ein/Ausgabevorrichtungen wie Lautsprecher, Brailleschriftlesezeile usw. ist es zweckmäßig, einen Scanner 9 zum Einlesen von Texten und einen Drucker vorzusehen. Die Arbeitsweise dieser Ausführungsform entspricht weitgehend dem ersten Ausführungsbeispiel ohne Zwischenspeicherung im Telefaxgerät 2. Vorteilhaft ist hier, daß die Ausführungsform kompakter ist.

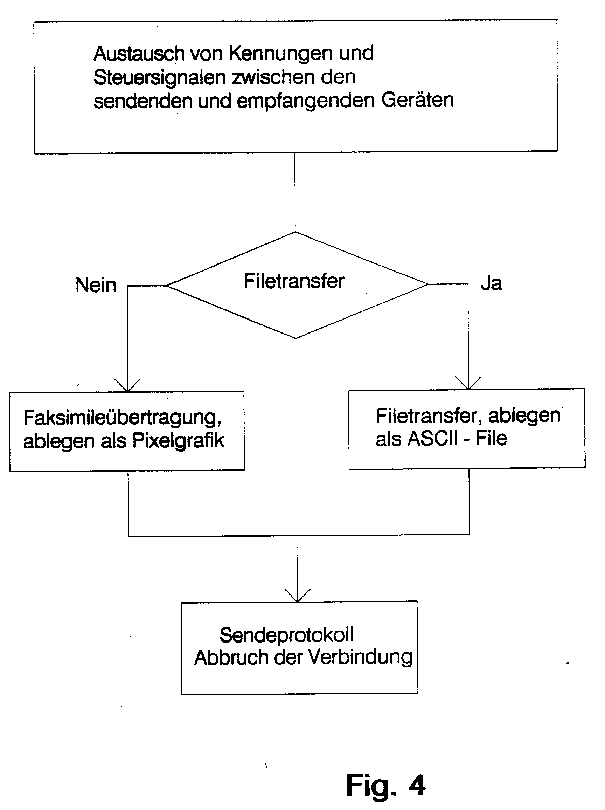

Neben der Übertragung als Pixelgrafik erlauben einige auf dem Markt befindliche Telefaxgeräte und Telefaxkarten auch eine Übertragung als ASCII-File. Dies hat den Vorteil, daß neben Übertragungszeit und Speicher - auch innerhalb der erfindungsgemäßen Vorrichtung - die Umwandlung der Pixelgrafik eingespart werden kann. Figur 4 zeigt schematisch den Verfahrensablauf innerhalb des empfangenen Telefaxgerätes 2. Wesentlich hierbei ist, daß sofort, nachdem die Kennungs- und die Steuersignale ausgetauscht sind, eine Abfrage nach der Art der Übertragung gestartet und die Bearbeitungsprozedur ausgewählt wird.

Nachfolgend wird der Verfahrensablauf beim Absenden und Empfangen einer Telefaxnachricht anhand eines Beispieles beschrieben:

Der zum Absenden vorgesehene Text wird vom Sehbehinderten z.B. mittels einer Brailleschrifteingabevorrichtung entworfen. Im Personalcomputer 5 wird das in Brailleschrift Geschriebene in ASCII-Format umgesetzt und zwar mit allen Sonderfunktionen und -zeichen (z.B. Fett, Kursiv, Groß, Klein) und liegt dann als ASCII-File vor. Wenn der Text abschließend ausgearbeitet ist, wird er an das Telefaxgerät 2 oder die Telefaxkarte 10 übertragen, wobei Kopfzeilen vorgesehen sind, die Steuerfunktionen beinhalten. Diese Steuerzeichen werden vom Telefaxgerät 2 ausgewertet und bestimmen, ob der Text nur ausgegeben oder als Telefaxnachricht gesendet werden soll. Im zweiten Fall erhält das Telefaxgerät 2 entsprechende zusätzliche Informationen wie die Rufnummer der Gegenstelle und ob es sich um ein ASCII-File oder um Pixelgrafik handelt. Wird Pixelgrafik gewünscht, wird diese in der Regel im Personalcomputer 5 oder, wenn die vorhandene CPU genügend leistungsfähig ist, im Telefaxgerät 2 selbst entsprechend aus dem vorhandenen ASCII-File generiert.

Erst im Telefaxgerät 2 oder in der Telefaxkarte läuft dagegen das standardisierte Übertragungsverfahren ab, wie es im VDMA Einheitsblatt 24985-1/2 DTS beschrieben ist.

Sind beide Telefaxgeräte für eine ASCII-Fileübertragung ausgerüstet, so erfolgt eine derartige Übertragung. Wenn eine ASCII-File-Übertragung nicht möglich ist, ergeben sich zwei Möglichkeiten:

Entweder ist das ASCII-File schon vor dem Verbindungsaufbau als Pixelgrafik erstellt worden, dann kann sofort mit der Übertragung fortgefahren werden, oder, wenn dies nicht der Fall ist, muß erst eine Umwandlung stattfinden; dies kann entweder bei bestehendem Verbindungsaufbau geschehen oder bei einem überlasteten Telekommunikationsnetz wird aus wirtschaftlichen Gründen die Verbindung aufgehoben; erst nachdem im Personalcomputer 5 die Pixelgrafik erstellt worden ist, wird die Verbindung erneut aufgebaut und die Telefaxnachricht übertragen. Eine vorteilhafte Weiterentwicklung besteht darin, daß im Telefaxgerät 2 zusammen mit der Telefonnummer die Art der Gegenstelle abspeichert wird, sodaß ggfs. schon vor dem Verbindungsaufbau die Telefaxnachricht in die von der Gegenstelle zu verarbeitende Übertragungsform (ASCII-File oder Pixelgrafik) umgewandelt wird; dies spart Übertragungszeit. ASCII-File und Pixelgrafik können auch parallel zum Absenden zur Verfügung stehen. Selbstverständlich muß immer eine Überprüfung der Gegenstelle nach dem Verbindungsaufbau stattfinden, um Veränderungen zu erfassen. Daneben ist es auch vorteilhaft, wenn in den "Nicht-Standardisierten- Datenfeldern (NS..-Datenfelder) Einstellbefehle weitergegeben werden, die den Datenaustausch bzw. die Datenauswertung erleichtern bzw. beschleunigen.

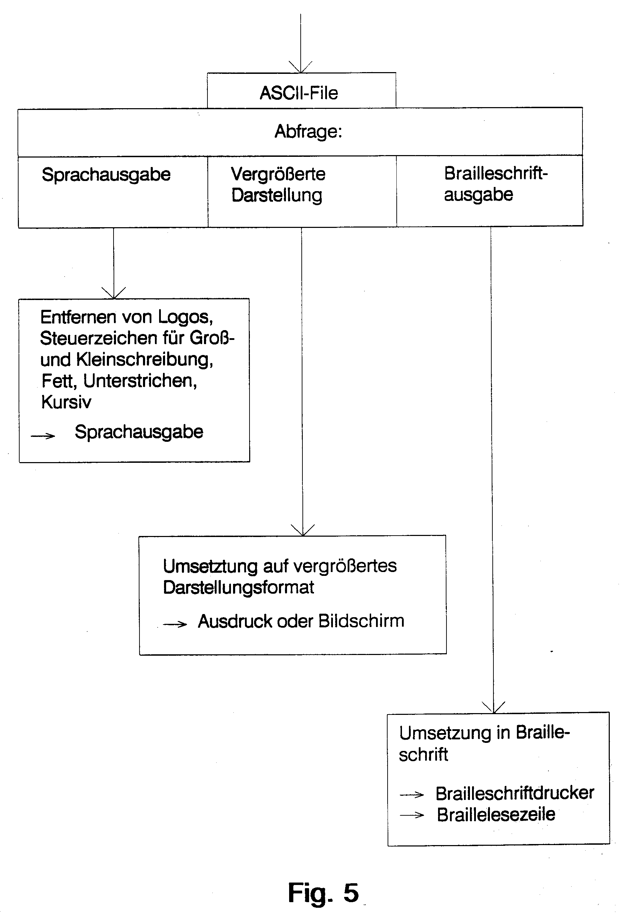

Im folgendem wird der Verfahrensablauf in der erfindungsgemäßen Vorrichtung 2 beschrieben, wenn dort eine Telefaxnachricht eingeht. Figur 5 zeigt schematisch den Verfahrensablauf beim Telefaxempfang.

Nachdem die Kennungs- und Steuersignale ausgetauscht sind, wird die Telefaxnachricht übertragen und danach erfolgt das Absetzen des Übertragungsprotokolls an das sendende Telefaxgerät 1.

Die Ausgabe der übertragenden Telefaxnachricht in der gerufenen erfindungsgemäßen Vorrichtung 2 kann dann auf folgende Arten vonstatten gehen werden:
- Sprachausgabe,
- vergrößerte Darstellung,
- Brailleschrift-Ausgabe.

Von diesen drei Ausgabeformen ist nur die letzte vollautomatisch möglich, da es schon Drucker für Brailleschrift gibt. Bei den beiden anderen können nur die Voraussetzungen für eine Ausgabe vorgenommen werden; d.h. die Umsetzung in die für die Ausgabe notwendigen Formate (z.B. bei der Sprachausgabe: Aussondern der Sonderfunktionen wie Fett, Kursiv, Unterstrichen, Logos, Zeichnungen). Die direkte Ausgabe muß dagegen immer vom Benutzer aktiviert und gesteuert werden.

Liegt die Telefaxnachricht als ASCII-File vor, so ist eine Überführung in die Ausgabeformate ohne Schwierigkeiten machbar, da dies nur umgekehrt wie bei der Eingabe erfolgt.

Dagegen steigt der Aufwand, wenn vom sendenden Telefaxgerät 1 nur Pixelgrafik abgeschickt werden kann. Figur 6 zeigt die Vorgehensweise bei Empfang einer Telefaxnachricht als Pixelgrafik. Hier sind vor der Weiterverarbeitung zusätzliche Zwischenschritte erforderlich. Das Pixelgrafik-File muß zuerst in ein ASCII-File umgewandelt werden. Dazu gibt es seit einiger Zeit Zeichenerkennungsprogramme, auch OCR-Programme (Optical Character Recognition) genannt. Diese sind in der Lage, eingescannte Textvorlage in ASCII-Format umzusetzen.

Als Umwandlungsmethode benutzen diese Programme grundsätzlich zwei Methoden, den Mustervergleich (Pattern Matching) und die Merkmalsanalyse (Feature Recognition).

Beim Mustervergleich werden im Programm vorhandene Muster mit den Buchstaben des Textes verglichen. Es ist hierzu eine große Musterbibliothek nötig; das Programm ist im wesentlichen auf die vorhandenen Muster beschränkt.

Bei der Merkmalsanalyse werden bestimmte Merkmale, wie etwa ein Kreis für ein "O" verglichen, was zu einem geringeren Programmumfang führt und das Erkennen nahezu jeder Schrift ermöglicht. Programme dieser Art sind z.B. Omnipage und Recognita Plus. Darüber hinaus gibt es auch schon Programme, welche beide Grundmethoden kombinieren.

Den derzeitig auf dem Markt befindlichen Programmen wird eine hohe Erkennungsrate bis zu 99,9% nachgesagt, ein Wert, der aber in der Praxis nicht zu erreichen sein wird. Daher wird das vom OCR-Programm erzeugte ASCII-File noch mit einem Rechtschreibkorrekturprogramm überarbeitet. Abhängig davon, welche Art von Erkennungsprogramm implementiert ist, muß entweder interaktiv in das Programm eingegriffen werden (z.B. um das Alphabet oder die Sprache festzulegen), oder das Erkennen des Alphabets und die Sprache erfolgt automatisch. Programme, die selbständig die Sprache bzw. das Alphabet erkennen, gibt es schon eine Vielzahl, sie sind aber noch sehr teuer und aufwendig.

OCR-Programme sind auch in der Lage, Zeichnungen, Logos usw. zu erkennen und auszublenden bzw. als Pixelgrafik im Text zu lassen. Dies ist besonders vorteilhaft für die Sprachausgabe bzw. der Brailleschriftausgabe, weil diese in diesem Fall unberücksichtigt bleiben müssen bzw. nur Hinweise auf derartige Teile gegeben werden können.

Ist die Konvertierung abgeschlossen, so erfolgt die Ausgabe z.B. vergrößert auf dem Monitor 6 oder mittels Sprache über Lautsprecher 7 oder Kopfhörer oder über Brailleschriftausgabeeinrichtungen. Je nach Leistungsfähigkeit der CPU im Telefaxgerät 2 können auch dort schon bestimmte Verfahrensabläufe (z. B. Umwandlung in ASCII-File, Rechtschreibüberprüfung) durchgeführt werden.

## Patentansprüche

1. Anordnung zum Empfangen und Versenden von Telefaxnachrichten, die aufweist:
- eine Netzwerkkarte (NCU) zur Anpassung an das Telekommunikationsnetz
- eine Prozessoreinheit (CPU) zur Steuerung der Anordnung und
- Speicher (RAM) zum Speichern von Daten und Text,
**dadurch gekennzeichnet**,
daß Zusatzeinrichtungen (8, 7, 6, 5, 4) angeschlossen sind, die Sehbehinderten die Ein- und Ausgabe von Telefaxnachrichten ermöglichen.

2. Anordnung nach Anspruch 1, **dadurch gekennzeichnet**,
daß die Zusatzeinrichtungen aus einem Personalcomputer (5) mit Monitor (6) und Tastatur (4) bestehen und
daß im Personalcomputer (5) der eingegebene oder empfangene Text zur vergrößerten Ausgabe auf dem Monitor (6) aufbereitet wird.

3. Anordnung nach einem der Ansprüche 1 oder 2,
**dadurch gekennzeichnet**,
daß die Tastatur (4) mit einer Brailleschriftlesezeile kombiniert ist.

4. Anordnung nach einem der vorangehenden Ansprüche,
**dadurch gekennzeichnet**,
daß ein Drucker zur Ausgabe von Brailleschrift an den Personalcomputer (5) angeschlossen ist.

5. Anordnung nach einem der vorangehenden Ansprüche,
**dadurch gekennzeichnet**,
daß der Personalcomputer (5) mit einem Lautsprecher (7) und einem Mikrofon (8) zur Sprachein- und -ausgabe angeschlossen ist.

6. Anordnung nach einem der vorangehenden Ansprüche,
**dadurch gekennzeichnet**,
daß die von einem Texterkennungsprogramm generierten Texte zusätzlich mit einem Rechtschreibkorrekturprogramm überarbeitet werden.

7. Anordnung nach einem der vorangehenden Ansprüche,
**dadurch gekennzeichnet**,
daß zusammen mit der Rufnummer die Art des Endgerätes abgespeichert und zum Versenden der Telefaxnachricht ausgewertet wird.

8. Anordnung nach einem der vorangehenden Ansprüche,
**dadurch gekennzeichnet**,
daß in den Nicht-Standardisierten-Datenfeldern der Steuersignale Parameter zum schnelleren und sicheren Auswerten der übertragenen Telefaxnachricht übermittelt werden.
